# EUROPEAN PATENT SPECIFICATION

(11) **EP 2 761 847 B1**
(45) Date of publication and mention of the grant of the patent: **29.04.2015**
(21) Application number: 12784691.3
(22) Date of filing: 24.09.2012
(51) Int. Cl.: H04L 29/06, H04M 1/253, H04M 1/57, H04M 1/663, H04M 1/665, H04M 7/00

(54) **METHOD AND SYSTEM FOR MANAGING THE COMMUNICATION BETWEEN TWO USERS**
VERFAHREN UND SYSTEM ZUR VERWALTUNG DER KOMMUNIKATION ZWISCHEN ZWEI BENUTZERN
PROCÉDÉ ET SYSTÈME DE GESTION DE LA COMMUNICATION ENTRE DEUX UTILISATEURS

(30) Priority: 26.09.2011 IT TO20110858
(43) Date of publication of application: 06.08.2014
(73) Proprietor: Messagenet S.p.A., 20123 Milano (MI) (IT)
(72) Inventor: FIORENTINO, Marco Alberto, 20121 Milano (MI) (IT); GALLI, Andrea Misa, 20148 Milano (MI) (IT)
(74) Representative: Zelioli, Giovanni
(86) International application number: PCT/IB2012/055063
(87) International publication number: WO 2013/046109

(56) References cited:
- GB-A- 2 466 333
- US-A1- 2003 152 207
- US-A1- 2008 080 691

## Description

### [TECHNICAL FIELD]

The present invention relates to a method and a system for managing the communication between two users through the Internet.

In general, the present invention finds application in the field of Internet communications, in particular voice or telephone Internet communications of the "Click-to-call" type.

### [PRIOR ART]

Internet communications have now become widespread and make use of many different technologies. The available Internet communication technologies include the so-called "Click-to-call" technology, wherein a user can click an element shown on a Web page in order to request in real time an immediate connection to another user. Typically, such a communication takes place by voice, e.g. through a Voice-Over-IP (VoIP) protocol, thus being similar to a classic telephone or videophone call.

Among the variants of this "Click-to-call" technology, the most interesting one allows a calling user to click a web link in order to establish a voice connection to the called user identified by the clicked element, e.g. a link. In this way, the calling user can reach the called user "on the phone" without incurring in any direct costs, provided that an Internet connection is available between the two users. In some cases, the software for voice and/or videophone communication is implemented in the web browser itself, so that the client needs not install and configure any additional software in his/her own operating system. This feature is especially useful when the called user is assigned a permanent web link, without any time limit, which he/she can then make available as an alternative and free means of reaching him/her, even though the caller does not know that user's telephone number.

This technology becomes particularly interesting when the called user is a company and the calling user is a prospect. Under this aspect, the "Click-to-call" technology represents a valid successor to the long-known "toll-free" numbers.

One example of a significant technology in this regard is the Skype© service. This service allows a user to call other users with just one click, through the respective Skype© accounts. However, the Skype© service requires that both users have already registered into the service, thus making the interaction between unregistered users difficult.

Since it is desirable to improve the easiness of "Click-to-call" communications, it becomes necessary to allow any calling user, even an unregistered one, to be able to make a call to a called user.

However, also allowing *any* calling user to initiate a communication may give rise to problems.

With a "Click-to-call" element, in fact, a user who wants to be reachable earns visibility and can more easily communicate with third parties, but at the same time he/she will expose him/herself to the risk of receiving undesired calls.

Also, since the ideal form of a "Click-to-call" service is gratuitous for the calling user and is associated with a widespread public service such as the Internet, there is a definite risk that the called user will be submerged with undesired calls - which is a kind of "spam" - even from ill-intentioned calling users.

Aiming at controlling a voice communication through the Internet, patent application US2003/0152207 by Ryan proposes a control system according to which a user of an Internet telephone communication service can individually control the communication options assigned to various called users, including the possibility of establishing a telephone connection.

In a first embodiment, patent US2003/0152207 to Ryan uses a list of calling user identifiers to be filled in by the called user, and only those users who are included in this list will be allowed to establish a telephone connection. If on the one hand this first embodiment effectively avoids the problem of undesired calls, on the other hand it significantly restricts the possibility of user interaction, in that the users must be included in a list of "welcome" identifiers known *a priori.*

In a second embodiment, patent US2003/0152207 to Ryan employs an "emergency call" mode, in which a calling user can contact the called user even if he/she is not included in a list of "welcome" identifiers known *a priori.* In this second embodiment, the calling user is required to provide an e-mail address to which a verification code will then be sent, which code must be entered by the calling user on a Web page. If the code entered by the calling user is correct, he/she will be able to initiate the call to the called user.

Although this second embodiment does limit the problem of undesired calls, it still has the drawback of excessively limiting the flexibility of user communication; therefore, it is only recommended for managing emergency situations in which it is of vital importance to be able to contact the called user by whatever means. For example, even this second embodiment gives the called user no information useful for deciding whether the call should be answered or not, depending on the calling user's identity.

### [BRIEF DESCRIPTION OF THE INVENTION]

The object of the present invention is to provide a method and a system which allow overcoming the above-mentioned drawbacks of the prior art, as well as other problems. In particular, it is one object of the present invention to provide a method and a system which make the use of "Click-to-call" services more desirable for the users, by improving the easiness of use and security thereof.

It is another object of the present invention to provide a method and a system wherein the calling user can easily and immediately initiate, through "Click-to-call" services, a communication with a called user.

Finally, it is a further object of the present invention to provide a method and a system wherein a user called by means of "Click-to-call" services can effectively filter the incoming calls and avoid any undesired calls.

These and other objects of the present invention are achieved through a method and a system for managing the Internet communication between two users incorporating the features set out in the appended claims, which are an integral part of the present description.

A general idea at the basis of the present invention is to provide a method for managing the communication between a calling user and a called user, wherein the communication takes place in real time through the Internet network, comprising the steps of: receiving a request to initiate a communication with a called user from a calling user; requesting the calling user to provide an identity element; validating the identity element of the calling user; transmitting the validated identity element to the called user.

In this manner, the called user can better evaluate whether the "Click-to-call" call should be answered or not.

Moreover, the provider of a "Click-to-call" communication service may be able to assign permanent "Click-to-call" web addresses to its clients, and to manage the communication requests directed to clients who want to be called and made by a plurality of calling users who may want to communicate with a selected called user. Advantageously, the called user is given a validated identity element of the calling user, i.e. tendentially reliable information about the identity of the called user; in this way, the calling user is informed about some personal data of the calling user. Advantageously, the validation procedure allows the calling user to gain access to a practical and useful service, wherein he/she can select and establish a communication with a called user and complete the validation procedure simply by providing an identity element to be validated by the service provider.

Preferably, the identity element directs to a recipient adapted to receive digital information, and the validation process comprises the steps of: sending a validation element addressed to the identity element; receiving a reply based on said validation element to confirm the actual availability of the identity element from the calling user. Advantageously, this improves the security of the method by verifying, through a short but effective procedure, the correspondence between the identity element provided by the calling user and the actual availability of the identity element from the same calling user. In this manner, it is possible to transmit to the called user an identity element which more reliably represents the calling user's identity, so that the called user can decide whether to pick up the call or not.

In a preferred embodiment, the identity element provided by the calling user comprises an e-mail address, to which the method provides for sending a validation link; through the validation link, the calling user can then confirm the actual availability of the identity element.

In one possible preferred embodiment, the communication request received by the called user includes a piece of information about the e-mail address of the calling user, and is made simultaneously with the validation of the e-mail address by the calling user.

In another preferred embodiment, the identity element provided by the calling user comprises a telephone number, preferably a cellular phone number, to which the method provides for sending validation information, such as, for example, an alphanumeric code, which will then be requested to the calling user in order to confirm the actual availability of the identity element, so that the call request may include the caller's telephone number.

Advantageously, both of these embodiments rely on already widespread and available tools, which allow improving the real-time communication between the calling user and the called user. In addition, these identifiers allow providing an identity element with a reasonable degree of reliability and in a quick and inexpensive manner for the users.

In yet another preferred embodiment, the calling user directly provides a digital identifier certified by third parties, e.g. an identity document comprising a "smart card", so that said identity can be transmitted to the called user along with the communication request. This embodiment may turn out especially advantageous should smart-card identification technologies become widespread.

Preferably, in all of the above-described cases the method provides for storing a validation acknowledgement into the computer terminal through which the calling user is accessing the "Click-to-call" service, e.g. by storing "Cookies" into the Internet browser. This advantageously avoids, while still ensuring the necessary security, having to repeat the validation procedure for subsequent "Click-to-call" calls from the same user, either for a single called user or for any other user who may be called in the future. After the validated identity element has been transmitted to the called user, the method further comprises the step of starting the communication if the called user accepts the call. Therefore, the "Click-to-call" service provider of the called user provides the information about the caller's identity element, but allows the called user to freely decide whether to establish or not the communication; advantageously, this improves the quality of the service for the called user, i.e. the main client of the service, who is put in a condition of being able to handle the call flow according to his/her preferences.

The method for managing the communication between a calling user and a called user according to the present invention is applicable, in particular, to real-time voice or videophone communications, which are established by relying on a communication network such as the Internet.

Preferably, the method is implemented through a digital computer system, comprising or associated with suitable software, adapted to manage the communication between a calling user and a called user. Said computer system may comprise a Web server, e.g. controlled by a service provider, connected to the Internet and adapted to interface through it to the computer terminals used by the calling user and the called user. Further objects and advantages of the present invention will become more apparent from the following detailed description and from the annexed drawings, which are supplied by way of non-limiting example.

### [BRIEF DESCRIPTION OF THE DRAWINGS]

In the drawings referred to in the description, the same reference numerals designate the same or equivalent elements or actions.
- Figure 1 schematically shows a "Click-to-call" communication through the Internet between two users;
- Figure 2 is a flow chart which illustrates an embodiment of the method according to the present invention;
- Figure 3 is a further flow chart which illustrates an embodiment of the method according to the present invention;
- Figure 4 is a further flow chart which illustrates an embodiment of the method according to the present invention;
- Figure 5 is a further flow chart which illustrates an embodiment of the method according to the present invention;
- Figure 6 is a further flow chart which illustrates an embodiment of the method according to the present invention;
- Figure 7 is a further flow chart which illustrates an embodiment of the method according to the present invention.

### [DETAILED DESCRIPTION]

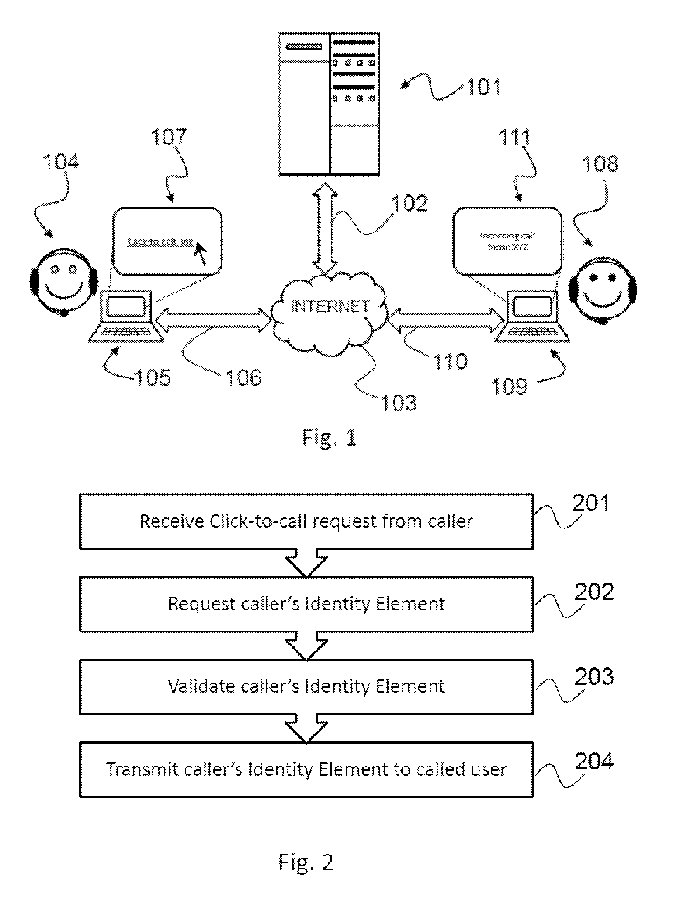

Figure 1 illustrates the management of a "Click-to-call" communication by a server 101 of a service provider. The server 101 is connected, through a connection 102, to a digital network that allows devices to exchange data. In this example, the connection 102 allows the server 101 to be connected to the Internet 103.

The server 101 gives a plurality of users access to a "Click-to-call" system.

The user 104 has a computer terminal 105 connected to the Internet 103 through a connection 106. For example, the user 104 may have a laptop connected to the Internet through a WiFi system. Alternatively, the user 104 may have a Smartphone connected to the Internet by means of WWAN technology.

The server 101 is adapted to give the terminal 105 access to at least one "Click-to-call" link, which can be acted upon by the user 104.

In this example, the user 104 displays on the screen 107 a Web page containing a "Click-to-call" link associated with a user 108, whom the user 104 wishes to call.

In an alternative example, the user 104 has a terminal 105 which is running a dedicated "Click-to-call" application (or program), i.e. comprising a user interface other than a Web page, while still allowing communication through the Internet network 103.

In the present description, reference will be made without limitation whatsoever to the user 104 as "calling user" and to the user 108 as "called user", it being understood that the communication might take place with exchanged roles or might include a larger number of users on both the calling side and the called side, mutually communicating with each other. In the event that no communication is established between the two users, in accordance with the teachings that will be provided below, the terms "called user" and "calling user" will have to be understood as potential qualifications, e.g. "he/she who is to be called" and "he/she who wants to call".

The calling user 104 can thus act upon the Web link displayed on the screen 107 to forward to the server 101 a request to initiate a "Click-to-call" communication with the called user 107.

This "Click-to-call" communication is preferably a real-time voice or videophone communication, and therefore the calling user 104 will use an earphone and a microphone or a hands-free system. In the present description, reference will be made to real-time communication by simply designating it as a "call", it being understood that the communication might also take place in other known forms, such as: videophone call, instant messaging, file sharing, data sharing, etc.

The communication management method according to the present invention starts as soon as the server 101 receives the "Click-to-call" request from the user 104, as will be described in detail below.

In general, the server 101 comprises a processor and an operating memory, and is adapted to prompt the calling user 104 to provide his/her "identity element". In ways that will be described in detail below, the server 101 is adapted to validate the identity element of the user 104.

Then the server 101 forwards the information about the identity element to the called user 108. The called user 108 is also equipped with loudspeakers and a microphone, and in turn is using a computer terminal 109 connected to the Internet 103 through the connection 110, e.g. an ADSL connection.

The server 101 is also adapted to exchange data with the terminal 109. To this end, in one example of embodiment the terminal 109 of the called user 108 preferably comprises software in the form of a Java® applet in a un web browser, which performs the function of a web phone.

Said software interfaces to the audio devices (e.g. microphone and loudspeaker), the volume of which can be adjusted by the user, encodes and decodes the voice in IP packets, handles the signalling, and shows the identity element to the called user. As an alternative, the VoIP component may be implemented directly within the browser by means of "plug-ins" created *ad hoc* for the browsers used by the calling user to open a web link, or generic "plug-ins" such as, for example, Adobe Flash, which can also implement VoIP functions.

Similarly, in one example of embodiment the terminal 105 of the calling user 104 preferably comprises software of a web browser, as described above, which performs the function of a web phone. Said software interfaces to the audio devices (e.g. microphone and loudspeaker), the volume of which can be adjusted by the user, encodes and decodes the voice in IP packets, and handles the signalling.

The server 101 then sends a signal to the user 108, preferably a visual and/or audible signal, which is representative of the fact that the user 104 wishes to establish a communication via "Click-to-call". The screen 111 then displays a message which includes the information, validated by the server 101, about the identity element of the calling user 104. Such information may also be processed by software applications running on the called user's device, so as to facilitate the decision process that will lead to answer or not the call, e.g. through the use of "blacklists", i.e. lists containing identifiers of unwelcome users.

Upon receiving this signal, the called user 108 may decide to accept the call; in such a case, the server 101 will initiate the communication between the terminal 105 and the terminal 109, thus allowing the called user 108 and the calling user 104 to communicate with each other as requested by the latter.

Alternatively, upon receiving the signal the called user 108 may decide to reject the call. In this case, the server 101 will notify the calling user 104 about the impossibility of establishing the communication, or it will simply interrupt the connection with the calling user 104.

It should be noted that the role of the server 101, handled by the "Click-to-call" service provider, of which the user 108 is a client and the user 104 is an external user, only gives the possibility of establishing a communication between users and of notifying the called user that there is a pending call request.

The role thus structured of the server 101, i.e. of the service provider, allows creating an "over-the-top" service, i.e. a service wherein there is a separation between the physical communication means (Internet) and the users' identities. The service provider thus makes sure that, within the reasonable possibilities offered, a piece of information relating to an identity element of the calling user is transferred to the called user. In this manner, it is still up to the called user whether to accept the call or not, so that the service is characterized by the utmost flexibility.

The method of the present invention is particularly effective when there are no relationships, whether contractual, personal or interest ones, known *a priori* between the users.

Figure 2 shows an embodiment of the method for managing the communication between the users 104 and 108, which is implemented by the server 101 and by the apparatuses operationally connected thereto, e.g. the terminals 105 and 109.

At step 201, a request is received from the calling user 104 to initiate a communication with the called user 108, e.g. as described with reference to Figure 1.

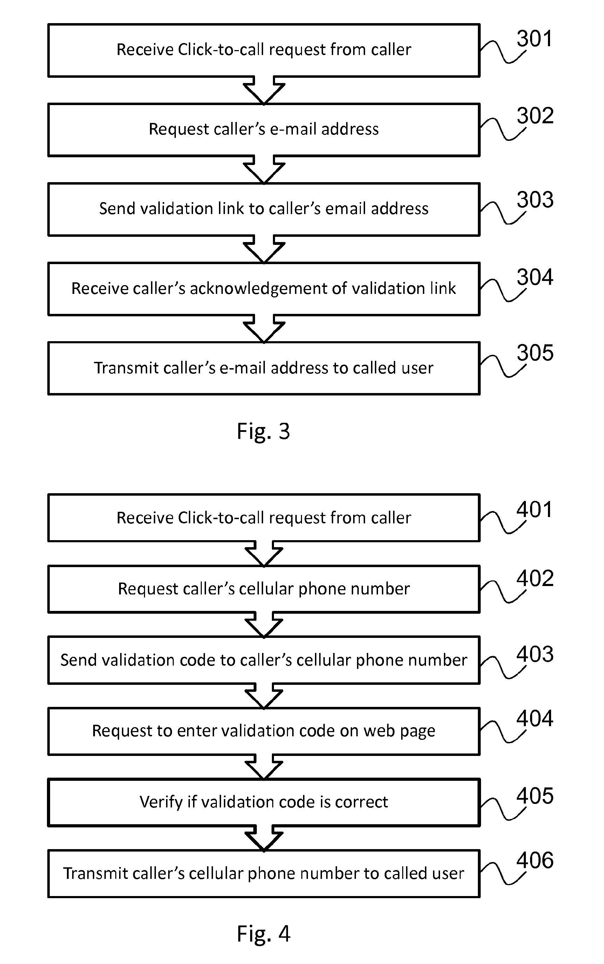

In reply to the "Click-to-call" request received at step 201, at step 202 the calling user 104 is asked to provide his/her own identity element. After the calling user 104 has provided his/her own identity element, at step 203 the identity element provided by the calling user 104 is validated. The implementation details of the steps 202 and 203 will become more apparent from the more detailed description of other embodiments referring to Figures 3, 4 and 5.

Finally, at step 204 the validated identity element is transmitted to the called user 108, so that the called user 108 receives accurate information about the identity of the caller 104 and can decide whether or not to accept the call and establish the communication, e.g. as described with reference to Figure 1.

Figure 3 illustrates a more detailed embodiment of the communication management method.

At step 301, a request is received from the calling user 104 to initiate a "Click-to-call" communication with the called user 108, e.g. as described with reference to Figure 1. At step 302, the calling user 104 is asked to provide his/her own e-mail address, e.g. by entering it into a form shown on the Web page displayed on the screen 107. The e-mail address of the user 104 will be used as an "identity element" associated with that user. At step 303, an e-mail message is sent, e.g. by the server 101, to the e-mail address specified by the calling user 104, which message contains a validation element such as, for example, a non-public validation link that can be clicked by the user 104.

At step 304, an acknowledgement is received indicating that the validation link has been correctly clicked. In this case, it can be assumed with certainty that the user 104 actually has at his/her disposal the e-mail address specified at step 302.

At step 305, the information about the validated e-mail address of the user 104 is transmitted to the called user 108.

Preferably, this transmission occurs simultaneously with the request to initiate a call with the user 104, whose validated identity element is shown. The communication between the users can thus be established, e.g. as described with reference to Figure f. In a preferred embodiment, along with the transmission of the validated identity element to the called user 108, the request to initiate the "Click-to-call" communication is sent as soon as the user 104 clicks the validation link.

Figure 4 illustrates another more detailed embodiment of the communication management method.

At step 401, a request is received from the calling user 104 to initiate a "Click-to-call" communication with the called user 108, e.g. as described with reference to Figure 1.

At step 402, the calling user 104 is asked to provide his/her own cellular phone number, e.g. by entering it into a form shown on the Web page displayed on the screen 107. The cellular phone number of the user 104 will be used as an "identity element" associated with that user.

At step 403, a message, e.g. an SMS message sent by the server 101 via a suitable cellular connection, is sent to the cellular phone number specified by the calling user 104, which message contains a validation element such as, for example, a non-public alphanumeric code, accessible to the user 104.

At step 404, the calling user 103 is asked to provide the validation element, e.g. by entering the validation code into a suitable form shown on the Web page displayed on the screen 107.

At step 405, it is verified if the calling user 104 has correctly provided the requested validation element. If, for example, the calling user 104 has entered the correct code, it can be assumed with certainty that the user 104 actually has at his/her disposal the cellular phone number specified at step 402.

Then, at step 406, the information about the validated cellular phone number of the user 104 is transmitted to the called user 108. Preferably, this transmission occurs simultaneously with the request to initiate a call with the user 104, whose validated identity element is shown. The communication between the users can thus be established, e.g. as described with reference to Figure 1.

Alternatively, an embodiment may be conceived wherein the calling user 104 provides a fixed network number that cannot receive written messages. In such a case, the calling user 104 may be contacted by telephone and, for example, he/she may be given a password by means of a voice synthesis system, to be used as a validation element as previously described.

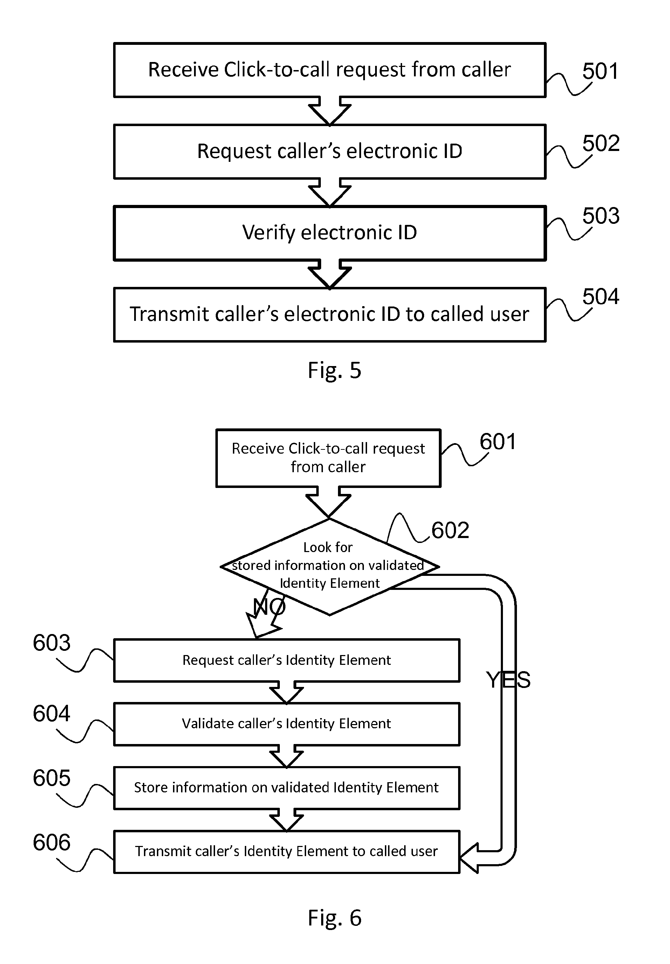

The embodiments described herein without any limitations whatsoever with reference to Figures 3 and 4 may be combined with any technology that allows sending the validation element to the calling user, e.g.: telephone, videophone, fax, electronic mail, social network, etc., and possibly also receiving the validation acknowledgement. Figure 5 illustrates another more detailed embodiment of the communication management method.

At step 501, a request is received from the calling user 104 to initiate a "Click-to-call" communication with the called user 108, e.g. as described with reference to Figure 1.

At step 502, the calling user 104 is requested to provide a certified electronic identifier, e.g. by inserting a smart card into a suitable smart-card reader connected to the terminal 105. Due to its very nature, one piece of information provided by the certified electronic identifier will be used as an "identity element" associated with the calling user 102, in compliance with the privacy regulations in force.

In many countries, the use of official identity documents is rapidly increasing, which are associated with an electronic identifier of the smart-card type which allows access to many kinds of services. Therefore, it appears to be advantageous to be able to use the same identifier in order to gain access to "Click-to-call" services.

At step 504, the electronic identifier of the calling user 104 is received and validated according to criteria dependent on the typology and encoding of the information contained in the electronic identifier. In this case, it can be assumed with even more certainty that the user 104 actually has at his/her disposal the identity element provided at step 502.

Then, at step 504, information about the validated identity element of the user 104 is transmitted to the called user 108. Preferably, this transmission occurs simultaneously with the request to initiate a call with the user 104, whose validated identity element is shown. The communication between the users can thus be established, e.g. as described with reference to Figure 1.

Figure 6 illustrates an embodiment of the communication management method which is particularly advantageous when the calling user 104 makes a plurality of successive "Click-to-call" requests. This case is especially relevant, for example, when there is a personal knowledge relationship (e.g. friendship) or a regular client relationship (e.g. provision of assistance services) between the users.

At step 601, a request is received from the calling user 104 to initiate a "Click-to-call" communication with the called user 108, e.g. as described with reference to Figure 1.

At step 602, information is searched for about an identity element already validated for the same calling user 104. For example, the server 101 may send a request to the terminal 105 to verify the presence of "cookies" of the Internet browser which would prove that the identity element has been validated.

Preferably, the information pertaining to an already validated identity element is stored in both the server 101 and the terminal 105 of the calling user 104.

Preferably, a cookie representative of said information is unique and cannot be predicted or synthesized by ill-intentioned users wanting to deceive the validation system. Preferably, the information contained in the cookies is not algorithmically correlated with the calling user's identity.

In a preferred embodiment, the information stored in the terminal 105 of the calling user 104 must be compared, even automatically, with corresponding information stored in the server 101. For this purpose, the server 101 comprises a table that matches callers' identities with cookies assigned thereto. Likewise, the server 101 comprises means for generating cookies and associating them with callers' identities.

If no stored information is available about a validated identity element, step 603 will be carried out, wherein the calling user 104 is asked to provide an identity element.

At step 604, the identity element provided by the calling user 104 is validated, e.g. as previously described.

At step 605, a piece of information relating to the currently validated identity element is stored, e.g. by saving it on the terminal 105. This can be easily attained by setting a "cookie" on the Web browser used by the calling user 104, i.e. by storing proprietary information in a dedicated "Click-to-call" application.

Then, at step 606, the information about the validated identity element of the user 104 is transmitted to the called user 108. Preferably, this transmission occurs simultaneously with the request to initiate a call with the user 104, whose validated identity element is shown. The communication between the users can thus be established, e.g. as described with reference to Figure 1.

If, on the contrary, stored information has been retrieved at step 602 about an identity element previously validated for the calling user 104, the process will go directly to the above-described step 606 without needing to repeat the validation procedure, since the latter has already been carried out.

The embodiment described herein with reference to Figure 6 may make use of known techniques for storing access credentials associated with a user, e.g. by providing that the stored information about a previously validated identity element has a validity deadline, e.g. one month. A "public terminal" access mode is also conceivable, wherein no information is stored about the validated identity element, thus conditionally going back to the description referring to Figure 2. In addition, the act of storing information relating to a previously validated identity element may confer validation on the identity element without limiting it to the called user 108, thus identifying the calling user 104 also in front of all other users whom he/she may want to call.

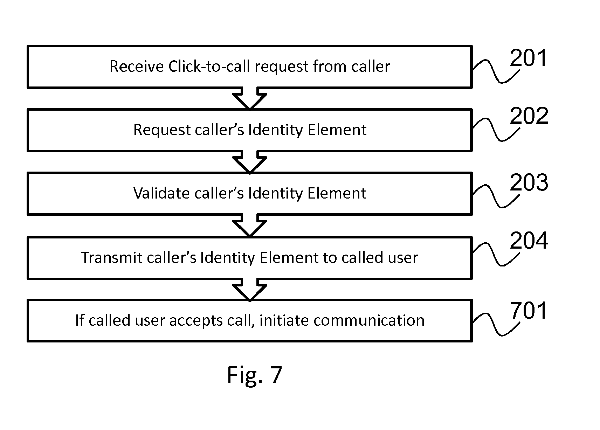

Figure 7 illustrates an embodiment of the communication management method which includes a final step 701, e.g. following the steps 201, 202, 203 and 204 already described with reference to Figure 2.

At step 701, the user 108 is sent a signal which is representative of the fact that the user 104 wishes to establish a "Click-to-call" communication. This signalling takes place, for example, through an audible alert, such as the classic "ring", or else through am audible/visual signal.

Preferably, this signalling is simultaneous with the already described step 204 or may even precede it.

Upon receiving this signal, the called user 108 may decide to accept the call, in which case the communication between the called user 108 and the calling user 104 will be established as requested by the latter and as already described, for example, with reference to Figure 1.

As an alternative, upon receiving the signal the called user may reject the call, as already described, for example, with reference to Figure 1.

The method for managing the communication between users according to the present invention is implemented through a management system which, of course, comprises one or more computers connected to one another by means of a computer network. In the example of Figure 1, the management system comprises the server 101, which is operationally connected to a plurality of terminals, e.g. the terminals 105 and 109.

The server 101 and the terminals 105 and 109 comprise, in an operating memory associated therewith, programs or code portions adapted to implement the method of the present invention.

The method of the present invention may also be implemented through mere interaction between the terminals 105 and 109, so long as at least one of them (preferably the called terminal) comprises, in an operating memory associated therewith, programs or code portions adapted to implement the method of the present invention.

A program or code portion executable on one or more computers and adapted to implement the communication management method of the present invention through a connection to a computer network may be contained in a memory residing in a computer, i.e. a "self-standing" memory such as a removable hard disk, a flash memory or an optical disk, or even residing in an Internet server, from which a user can download the program.

In general, it is conceivable to use other user validation techniques in combination with the teachings of the present invention, without however departing from the protection scope of the present invention as set out in the appended claims.

For example, validation of the calling user's identity element might be requested only after a predetermined time of "free" use of the "Click-to-call" service; this may be advantageous if the calling user is, for example, a private user, who scrupulously keeps the link in order to be called, without making it public.

In another embodiment, the called user can decide whether to use or not the method for validating the calling user's identity element by expressing a preference *a priori,* which will remain valid until the called user decides to change it. For example, some users may want to be called by any person, with no filter whatsoever; it is therefore advantageous to offer also this option to the called user.

Also, the validation of the calling user's identity element may be required only after a predetermined number of "Click-to-call" requests; this could be advantageous should the calling user be a fraudulent one, who is making many undesired calls to various call recipients.

## Claims

1. A method for managing a communication between a calling user (104) and a called user (108), wherein said communication takes place in real time through the Internet network, comprising the steps of:
- receiving (201, 301, 401, 501, 601) from said calling user (104) a request to initiate said communication with said called user (108);
- requesting (202, 302, 402, 502, 603) said calling user (104) to provide an identity element;
- validating (203, 503) said identity element of said calling user (104);
- transmitting (204, 305, 406, 504, 606) said validated identity element to said called user (108).

2. A method according to claim 1, wherein said identity element directs to a recipient adapted to receive information elements, and said step of validating (203) said identity element comprises:
- sending (303, 403) a validation element addressed to said identity element;
- receiving (304, 404) a reply based on said validation element to confirm (304, 405) the availability of said identity element from said calling user (104).

3. A method according to claim 2, wherein said identity element comprises an e-mail address, and said validation element comprises a web link that is able to be activated by said calling user (104), wherein the method comprises the step of: receiving (304) an acknowledgement of the activation of said web link.

4. A method according to claim 3, further comprising the step of: forwarding to said called user (108) a request to initiate said communication, simultaneously with said activation of said web link.

5. A method according to claim 2, wherein said validation element (403) comprises an alphanumeric code, and wherein the method comprises: requesting (404) said alphanumeric code to said calling user (104) to verify (405) that it matches said validation element.

6. A method according to claim 5, wherein said identity element comprises a cellular network number.

7. A method according to claim 1, wherein said identity element comprises at least one piece of information obtained (502) from an electronic identity device.

8. A method according to one of claims 1 to 7, further comprising the step of:
storing (605) information associated with said validated identity element.

9. A method according to claim 8, wherein said identity element is requested (202, 302, 402, 502, 603) after searching (602) a memory for said stored information associated with said validated identity element.

10. A method according to claim 9, wherein said stored information is contained in a memory of a terminal (105) of said calling user (104) and is searched for therein, and further comprising the step of: comparing said stored information, preferably automatically, with further reference information stored in a memory associated with a web server (101).

11. A method according to one of claims 1 to 10, further comprising the steps of:
forwarding to said called user (108) a request to initiate said communication; receiving from said called user (108) an acceptance signal; initiating (701) said communication in response to said acceptance signal.

12. A method according to one of claims 1 to 11, wherein said communication comprises a voice, video or text communication.

13. A method according to one of claims 1 to 12, wherein a predetermined time or a predetermined number of communication initiation requests is awaited for, before executing said request (202, 302, 402, 502, 603), validation (203, 503) and transmission (204, 305, 406, 504, 606) steps.

14. A method according to one of claims 1 to 13, wherein, prior to said request (202, 302, 402, 502, 603), validation (203, 503) and transmission (204, 305, 406, 504, 606) steps, said called user (108) is asked to express his/her preference in regard to the management of said communication.

15. A system for managing the communication between at least one calling user and at least one called user, said system comprising at least one processor, at least one operating memory, and at least one connection to an Internet network, **characterized in that** it is configured to implement the method according to one of claims 1 to 14.

## Patentansprüche

1. Verfahren zum Managen einer Kommunikation zwischen einem anrufenden Nutzer (104) und einem angerufenen Nutzer (108), wobei die Kommunikation in Echtzeit über das Internet-Netzwerk stattfindet, umfassend die Schritte:
- Empfangen (201, 301, 401, 501, 601), von dem anrufenden Nutzer (104), einer Anforderung, die Kommunikation mit dem angerufenen Nutzer (108) zu initiieren;
- Anfordern (202, 302, 402, 502, 603), den anrufenden Nutzer, (104), ein Identitätselement bereitzustellen;
- Validieren (203, 503) des Identitätselements des anrufenden Nutzers (104);
- Übermitteln (204, 305, 406, 504, 606) des validierten Identitätselements zu dem angerufenen Nutzer (108).

2. Verfahren nach Anspruch 1, wobei das Identitätselement auf einen Empfänger weist, der angepasst ist, Informationselemente zu empfangen, und wobei der Schritt des Validierens (203) des Identitätselements umfasst:
- Senden (303, 403) eines Validierungselements, das an das Identitätselement adressiert ist;
- Empfangen (304, 404) einer Antwort basierend auf dem Validierungselement, um die Verfügbarkeit des Identitätselements zu bestätigen (304, 405), von dem anrufenden Nutzer (104).

3. Verfahren nach Anspruch 2, wobei das Identitätselement eine E-Mail-Adresse umfasst und das Validierungselement einen Weblink umfasst, der in der Lage ist, durch den anrufenden Nutzer (104) aktiviert zu werden, wobei das Verfahren den Schritt umfasst: Empfangen (304) einer Bestätigung der Aktivierung des Weblinks.

4. Verfahren nach Anspruch 3, des Weiteren umfassend den Schritt: Weiterleiten, an den angerufenen Nutzer (108), einer Anforderung, die Kommunikation zu initüeren, gleichzeitig mit der Aktivierung des Weblinks.

5. Verfahren nach Anspruch 2, wobei das Validierungselement (403) einen alphanumerischen Code umfasst, und wobei das Verfahren umfasst: Anfordern (404) des alphanumerischen Codes von dem anrufenden Nutzer (104), um zu verifizieren (405), dass dieser dem Validierungselement entspricht.

6. Verfahren nach Anspruch 5, wobei das Identitätselement eine Mobilfunknetznummer umfasst.

7. Verfahren nach Anspruch 1, wobei das Identitätselement zumindest eine Information umfasst, die von einem elektronischen Identitätsgerät erhalten wurde (205).

8. Verfahren nach einem der Ansprüche 1 bis 7, des Weiteren umfassend den Schritt: Speichern (605) einer Information, die mit dem validierten Identitätselement assoziiert ist.

9. Verfahren nach Anspruch 8, wobei das Identitätselement nach einem Durchsuchen (602) eines Speichers für die gespeicherte Information, die mit dem validierten Identitätselement assoziiert ist, angefordert wird (202, 302, 402, 502, 603).

10. Verfahren nach Anspruch 9, wobei die gespeicherte Information in einem Speicher eines Terminals (105) des anrufenden Nutzers (104) enthalten ist und nach ihr darin gesucht wird, und des Weiteren umfassend den Schritt: Vergleichen der gespeicherten Information, bevorzugt automatisch, mit einer weiteren Referenzinformation, die in einem Speicher gespeichert ist, der mit einem Webserver (101) assoziiert ist.

11. Verfahren nach einem der Ansprüche 1 bis 10, des Weiteren umfassend den Schritt: Weiterleiten, an den angerufenen Nutzer (108) einer Anforderung, die Kommunikation zu initiierten; Empfangen, von dem angerufenen Nutzer (108), eines Zustimmungssignals; Initiieren (701) der Kommunikation in Antwort auf das Zustimmungssignal.

12. Verfahren nach einem der Ansprüche 1 bis 11, wobei die Kommunikation eine Sprach-, Video- oder Textkommunikation umfasst.

13. Verfahren nach einem der Ansprüche 1 bis 12, wobei eine vorbestimmte Zeit oder eine vorbestimmte Anzahl von Kommunikationsinitiierungsanforderungen abgewartet wird, bevor die Anforderungs- (202, 302, 402, 502, 603), Validierungs- (203, 503) und Übertragungsschritte (204, 305, 406, 504, 606) ausgeführt werden.

14. Verfahren nach einem der Ansprüche 1 bis 13, wobei, vor den Anforderungs- (202, 302, 402, 502, 603), Validierungs- (203, 503) und Übertragungsschritten (204, 305, 406, 504, 606), der angerufene Nutzer (108) gefragt wird, seine/ihre Präferenz in Bezug auf das Management der Kommunikation auszudrücken.

15. System zum Managen der Kommunikation zwischen zumindest einem anrufenden Nutzer und zumindest einem angerufenen Nutzer, wobei das System zumindest einen Prozessor, zumindest einen Betriebsspeicher und zumindest eine Verbindung zu einem Internet-Netzwerk umfasst, **dadurch gekennzeichnet, dass** es ausgebildet ist, das Verfahren nach einem der Ansprüche 1 bis 14 zu implementieren.

## Revendications

1. Procédé de gestion de la communication entre un utilisateur appelant (104) et un utilisateur appelé (108), dans lequel ladite communication se produit en temps réel par l'intermédiaire du réseau Internet, comportant les étapes comprenant le fait de :
- recevoir (201, 301, 401, 501, 601) dudit utilisateur appelant (104) une requête pour initier ladite communication avec ledit utilisateur appelé (108) ;
- demander (202, 302, 402, 502, 603) audit utilisateur appelant (104) de fournir un élément d'identité ;
- valider (203, 503) ledit élément d'identité dudit utilisateur appelant (104) ;
- transmettre (204, 305, 406, 504, 606) ledit élément d'identité validé audit utilisateur appelé (108).

2. Procédé selon la revendication 1, dans lequel ledit élément d'identité oriente vers un destinataire conçu pour recevoir des éléments d'information, et dans lequel ladite étape de validation (203) dudit élément d'identité comporte de :
- transmettre (303, 403) un élément de validation adressé audit élément d'identité ;
- recevoir (304, 404) une réponse sur la base dudit élément de validation afin de confirmer (304, 405) la disponibilité dudit élément d'identité provenant dudit utilisateur appelant (104).

3. Procédé selon la revendication 2, dans lequel ledit élément d'identité comporte une adresse de courrier électronique, et dans lequel ledit élément de validation comporte un lien avec un site Web qui peut être activé par ledit utilisateur appelant (104), procédé qui comprend l'étape consistant à recevoir (304) un accusé de réception de l'activation dudit lien avec un site Web.

4. Procédé selon la revendication 3 comportant, de plus, l'étape comprenant de : faire suivre vers ledit utilisateur appelé (108) une requête pour initier ladite communication, simultanément à ladite activation dudit lien avec un site Web.

5. Procédé selon la revendication 2, dans lequel ledit élément de validation (403) comprend un code alphanumérique, et dans lequel le procédé comprend de demander (404) ledit code alphanumérique audit utilisateur appelant (104) afin de vérifier (405) qu'il coïncide avec ledit élément de validation.

6. Procédé selon la revendication 5, dans lequel ledit élément d'identité comporte un numéro de réseau cellulaire.

7. Procédé selon la revendication 1, dans lequel ledit élément d'identité comprend au moins une partie de l'information obtenue (502) à partir d'un dispositif d'identité électronique.

8. Procédé selon l'une des revendications 1 à 7 comportant, de plus, l'étape comprenant de stocker (605) une information associée au dit élément d'identité validé.

9. Procédé selon la revendication 8, dans lequel ledit élément d'identité est demandé (202, 302, 402, 502, 603) après avoir recherché (602) dans une mémoire ladite information stockée associée au dit élément d'identité validé.

10. Procédé selon la revendication 9 dans lequel ladite information stockée est contenue dans une mémoire d'un terminal (105) dudit utilisateur appelant (104) et y est recherchée, et comporte, de plus, l'étape comprenant de comparer ladite information stockée, de préférence de façon automatique, avec une autre information de référence stockée dans une mémoire associée au dit serveur Web (101).

11. Procédé selon l'une des revendications 1 à 10, comportant, de plus, les étapes comprenant le fait de :
faire suivre au dit utilisateur appelé (108) une requête pour initier ladite communication ; recevoir dudit utilisateur appelé (108) un signal d'accord ; initier (701) ladite communication en réponse au dit signal d'accord.

12. Procédé selon l'une des revendications 1 à 11, dans lequel ladite communication comporte une communication vocale, une communication vidéo ou une communication de texte.

13. Procédé selon l'une des revendications 1 à 12, dans lequel un temps prédéterminé ou un nombre prédéterminé de requêtes d'initiation de communication est attendu, avant d'exécuter lesdites étapes de requête (202, 302, 402, 502, 603), de validation (203, 503) et de transmission (204, 305, 406, 504, 606).

14. Procédé selon l'une des revendications 1 à 13 dans lequel, avant lesdites étapes de requête (202, 302, 402, 502, 603), de validation (203, 503) et de transmission (204, 305, 406, 504, 606), ledit utilisateur appelé (108) est requis d'exprimer sa préférence en ce qui concerne la gestion de ladite communication.

15. Système de gestion de la communication entre au moins un utilisateur appelant et au moins un utilisateur appelé, ledit système comportant au moins un processeur, au moins une mémoire fonctionnelle, et au moins une connexion à un réseau Internet, **caractérisé en ce qu'**il est configuré pour mettre en oeuvre le procédé selon l'une des revendications 1 à 14.
